# EUROPEAN PATENT APPLICATION

(11) **EP 3 051 893 A1**
(43) Date of publication of application: **03.08.2016**
(21) Application number: 13894819.5
(22) Date of filing: 29.09.2013
(51) Int. Cl.: H04W 68/02

(54) **PAGING METHOD, NETWORK DEVICE AND COMMUNICATION SYSTEM**

(71) Applicant: Fujitsu Limited, Kawasaki-shi, Kanagawa 211-8588 (JP)
(72) Inventor: CHANG, Ningjuan, Beijing 100025 (CN); WANG, Weiwei, Beijing 100025 (CN)
(74) Representative: Hutchison, James
(86) International application number: PCT/CN2013/084602
(87) International publication number: WO 2015/042911

(57) **Abstract**

A paging method, a network device and a communication system. The method comprises: receiving, by a mobility management entity (MME), paging indication information transmitted by a base station or a gateway, the paging information indicating that user equipment in an idle state has been waken up. The embodiments of the present disclosure enable the MME to avoid retransmitting a paging message, and reduce the overhead of paging signaling.

## Description

### Technical Field

The present disclosure relates to the field of communications, and particularly, to a paging method, a network device and a communication system.

### Background

In a Long Term Evolution (LTE) network, when User Equipment (UE) in an idle state wants to transmit or receive data, it should enter a connection state from the idle state, and set up a control plane connection and a user plane connection with the network side. In which, the control plane connection includes a Radio Resource Control (RRC) connection between the UE and a base station (e.g., eNB), and an S1 connection between a base station and a Mobility Management Entity (MME); the user plane connection includes a radio bearer between the UE and the base station, and a connection between the base station and a gateway (GW). For example, the gateway may be a Packet Data Network Gateway (PDN GW) and/or a Serving Gateway (SGW).

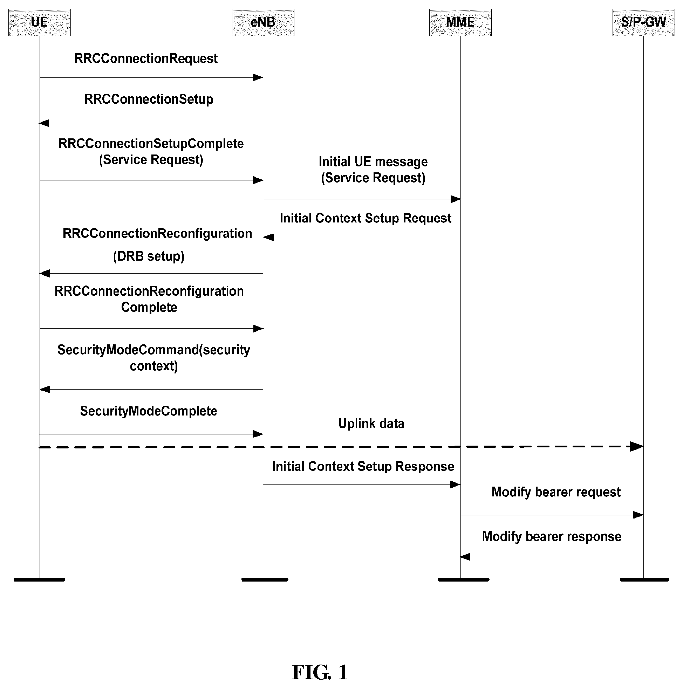

Fig. 1 is a flowchart of state transition of UE performing a data transmission in the prior art. Fig. 1 illustrates that the UE transits from an idle state into a connection state, and illustrate a setup processes of a series of control plane connections and user plane connections, and the transmission mechanism is called as a conventional mechanism. Please refer to 3GPP TS 36.300 and 3GPP TS 23.401 for the detailed setup processes, and the contents thereof are incorporated herein by reference.

Along with the increase of the number of terminal devices in a mobile network and the diversification of services, a higher requirement is proposed for network resources. On one hand, the network resources may be enhanced by extending the network resources, and on the other hand, the network resources may be enhanced by improving a utilization rate of the network resources. Small data transmission is a typical characteristic of a Machine Type Communication (MTC) application and an intelligent terminal service, and it means transmitting and receiving a small amount of data packets between UE and a network side. The small data transmission may be frequent or not frequent. For example, in an intelligent temperature detection application, a MTC terminal device reports the detected temperature value to the MTC server each hour. In the application, data reported each time is just a temperature value detected at one time, and the amount of data is small, thus it may be deemed as a small data transmission.

When a small data transmission is to be carried out in the existing mechanism, UE needs to perform a service request process to a network side, thus a state of the UE is changed from an idle state to a connection state to receive a service from the network side. As compared with the transmitted data volume, the utilization rate of system resources will be decreased. In order to improve the utilization rate of the system resources for the small data transmission, one way at present is to reduce the network signaling overhead in the process of small data transmission.

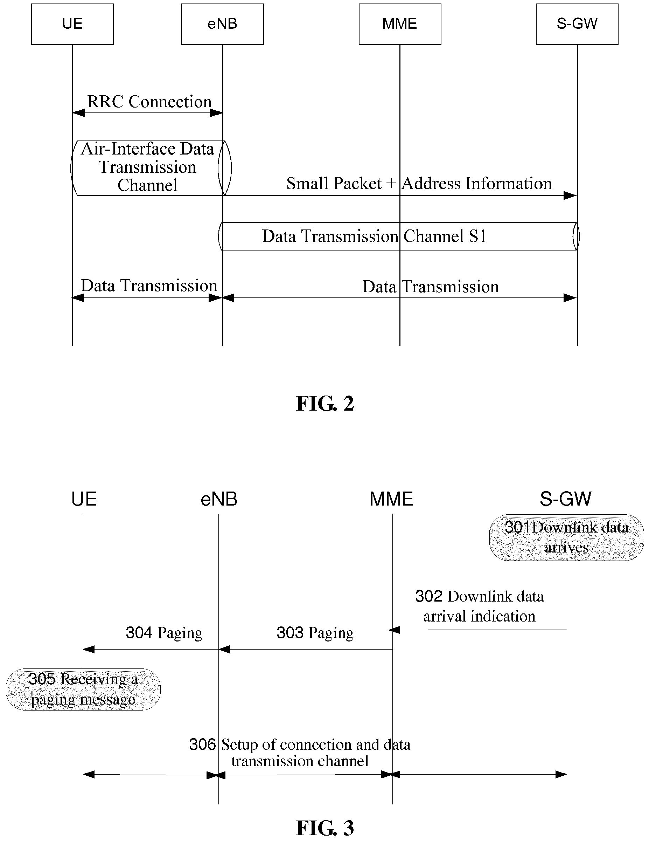

Fig. 2 is a flowchart of an enhanced small data transmission process in the existing mechanism. As illustrated in Fig. 2, in the enhanced small data transmission mechanism, a data transmission channel is established between an eNB and a SGW by carrying address information in data packets, without through a station of the control plane, such as the MME, which avoids a setup of a control plane connection between the eNB and the MME and a signaling process between the MME and the SGW before a data plane is set up, and saves the signaling overhead. Herein the transmission mechanism is called as a connectionless mechanism for data transmission.

Fig. 3 is a flowchart of a UE wakeup process after downlink data arrives in the existing mechanism. When a downlink service arrives, the network side wakes up the UE in an idle state to perform a service transmission through the process as illustrated in Fig. 3.

As illustrated in Fig. 3, the method comprises:
Step 301: downlink data of UE in an idle state arrives;
Step 302: an SGW transmits a downlink data arrival indication to an MME;
Step 303: according to information of a Tracking Area (TA) stored therein, the MME transmits a paging message to an eNB located in the TA;
Step 304: the eNB broadcasts the paging message via an air interface;
Step 305: the UE receives the paging message;
Step 306: the UE establishes a connection with a network side, including an RRC connection between the UE and the eNB and a Network Attached Storage (NAS) connection between the UE and the MME; wherein,
when acquiring that the UE has been waken up through an NAS connection setup request transmitted from the UE, the MME stops transmitting the paging message and sets up a data transmission channel between the UE and the SGW;
when the UE does not respond to the paging message successfully, e.g., the MME does not receive the NAS connection setup request transmitted from the UE within a predetermined time, the MME may retransmit the paging message until a response from the UE is received or a number of times of the paging transmission reache a preset maximum value or the paging transmission expires .

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

Currently, in the small data packet transmission mechanism for reducing signaling overhead, if an NAS connection with the MME is not required to be set up when the UE performs a communication, there exists the following problem in the connectionless mechanism as illustrated in Fig. 2:
After the downlink data arrives, the MME transmits a paging message to wake up the UE in the idle state, and the paging message may carry an indication that indicates the UE to perform a transmission of the connectionless mechanism. After receiving the paging message, if the UE responds by setting up a data transmission channel with the SGW through the connectionless mechanism without needing to set up the NAS connection with the MME, the MME does not know whether the UE has been waken up. Thus, the MME may retransmit the paging message to ensure waking up the UE. If the UE has been waken up at that time, an unnecessary paging message transmission may be caused, which wastes resources on a S1 interface and an air interface.

The embodiments of the present disclosure provide a paging method, a network device and a communication system, thereby reducing unnecessary paging overhead.

According to a first aspect of the present disclosure, a paging method is provided, comprising:
receiving, by a mobility management entity (MME), paging indication information transmitted by a base station or a gateway, the paging indication information indicating that user equipment in an idle state has been waken up.

According to a second aspect of the present disclosure, a paging method is provided, comprising:
transmitting, by a base station, paging indication information to a mobility management entity (MME), when user equipment connecting to the base station is user equipment corresponding to a user equipment identifier contained in a paging message received by the base station from the MME and when the user equipment is in a connectionless mechanism for data transmission, and the paging indication information indicating that user equipment in an idle state has been waken up.

According to a third aspect of the present disclosure, a paging method is provided, comprising:
transmitting, by a gateway, paging indication information to a mobility management entity (MME), when user equipment that has set up a data transmission channel with the gateway is user equipment corresponding to a user equipment identifier contained in a data arrival indication message transmitted by the gateway to the MME and when the user equipment is in a connectionless mechanism for data transmission, and the paging indication information indicating that user equipment in an idle state has been waken up.

According to a fourth aspect of the present disclosure, a mobility management entity is provided, comprising:
a first receiving unit configured to receive paging indication information transmitted by a base station or a gateway, and the paging indication information indicating that user equipment in an idle state has been waken up.

According to a fifth aspect of the present disclosure, a base station is provided, comprising:
a first transmitting unit configured to transmit paging indication information to a mobility management entity (MME), when user equipment connecting to the base station is a user equipment corresponding to a user equipment identifier contained in a paging message received by the base station from the MME and when the user equipment is in a connectionless mechanism for data transmission, and the paging indication information indicating that user equipment in an idle state has been waken up.

According to a sixth aspect of the present disclosure, a gateway is provided, comprising:
a second transmitting unit configured to transmit paging indication information to a mobility management entity (MME), when user equipment that has set up a data transmission channel with the gateway is user equipment corresponding to a user equipment identifier contained in a data arrival notification message transmitted by the gateway to the MME and when the user equipment is in a connectionless mechanism for data transmission, and the paging indication information indicating that user equipment in an idle state has been waken up.

According to a seventh aspect of the present disclosure, a paging method is provided, comprising:
receiving, by a mobility management entity (MME), data arrival indication information of a user equipment in an idle state transmitted by a gateway, to trigger the MME to wake up the user equipment; and
transmitting, by the MME, a paging message to the user equipment through a base station when the user equipment uses a small data transmission mechanism, and not retransmitting the paging message.

According to an eighth aspect of the present disclosure, a paging method is provided, comprising:
transmitting, by a gateway, data arrival indication information of user equipment in an idle state to a mobility management entity (MME), to trigger the MME to wake up the user equipment; and
retransmitting, by the gateway, the data arrival indication information when the user equipment has not been waken up.

According to a ninth aspect of the present disclosure, a mobility management entity is provided, comprising:
a second receiving unit configured to receive data arrival indication information of user equipment in an idle state transmitted by a gateway, to trigger the mobility management entity to wake up the user equipment; and
a second processing unit configured to transmit a paging message to the user equipment through a base station when the user equipment uses a small data transmission mechanism, and not retransmit the paging message.

According to a tenth aspect of the present disclosure, a gateway is provided, comprising:
a third transmitting unit configured to transmit data arrival indication information of user equipment in an idle state to a mobility management entity (MME), to trigger the MME to wake up the user equipment; and
a third processing unit configured to retransmit the data arrival indication information when the user equipment has not been waken up.

According to an eleventh aspect of the present disclosure, a communication system is provided, comprising user equipment, a base station, a mobility management entity (MME) and a gateway, wherein
the gateway is used for transmitting paging indication information to the MME, when the user equipment that has set up a data transmission channel with the gateway is user equipment corresponding to a user equipment identifier contained in a data arrival indication message transmitted by the gateway to the MME and when the user equipment is in a connectionless mechanism for data transmission, and the paging indication information indicating that user equipment in an idle state has been waken up; and
the MME is used for receiving the paging indication information transmitted by the gateway, the paging indication information indicating that user equipment in an idle state has been waken up, and stopping transmitting a paging message.

According to a twelfth aspect of the present disclosure, a communication system is provided, comprising user equipment, a base station, a mobility management entity (MME) and a gateway, wherein
the base station is used for transmitting paging indication information to the MME, when the user equipment in connection with the base station is user equipment corresponding to a user equipment identifier contained in a paging message received by the base station from the MME and when the user equipment is in a connectionless mechanism for data transmission, and the paging indication information indicating that a user equipment in an idle state has been waken up; and
the MME is used for receiving the paging indication information transmitted by the gateway, the paging indication information indicating that user equipment in an idle state has been waken up, and stopping transmitting the paging message.

According to a thirteenth aspect of the present disclosure, a communication system is provided, comprising user equipment, a base station, a mobility management entity (MME) and a gateway, wherein
the gateway is used for transmitting data arrival indication information of user equipment in an idle state to the MME, to trigger the MME to wake up the user equipment, and is further used for retransmitting the data arrival indication information when the user equipment has not been waken up; and
the MME is used for receiving the data arrival indication information of the user equipment in an idle state transmitted by the gateway, to trigger the MME to wake up the user equipment, and transmitting a paging message to the user equipment through the base station when the user equipment uses a small data transmission mechanism, and not retransmitting the paging message.

According to another aspect of the present disclosure, a computer readable program is provided, wherein when being executed in a base station, enabling a computer to execute the paging method according to the second aspect in the base station.

According to another aspect of the present disclosure, a storage medium storing a computer readable program is provided, wherein the computer readable program enables a computer to execute the paging method according to the second aspect in a base station.

According to another aspect of the present disclosure, a computer readable program is provided, wherein when being executed in a mobility management entity, enabling a computer to execute the paging method according to the first or seventh aspect in the mobility management entity.

According to another aspect of the present disclosure, a storage medium storing a computer readable program is provided, wherein the computer readable program enables a computer execute the paging method according to the first or seventh aspect in a mobility management entity

According to another aspect of the present disclosure, a computer readable program is provided, wherein when being executed in a gateway, enabling a computer to execute the paging method according to the fifth or eighth aspect in the gateway.

According to another aspect of the present disclosure, a storage medium storing a computer readable program is provided, wherein the computer readable program enables a computer execute the paging method according to the fifth or eighth aspect in a gateway.

The embodiments of the present disclosure have the beneficial effect that a mobility management entity (MME) receives paging indication information transmitted by a base station or a gateway, the paging information indicating that user equipment in an idle state has been waken up, thereby enabling the MME to avoid re-transmitting a paging message, and reducing the overhead of paging signaling.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the drawings in the following description are only some embodiments of the present disclosure. And other drawings may be obtained by those skilled in the art according to these drawings without making an inventive effort. In the drawings:
Fig. 1 is a flowchart of state transition of UE performing a data transmission in the prior art;
Fig.2 is a flowchart of an enhanced small data transmission process in the existing mechanism;
Fig. 3 is a flowchart of UE wakeup process after downlink data arrives in the existing mechanism;
Fig. 4 is a flowchart of a paging method in Embodiment 1 of the present disclosure;
Fig. 5 is a flowchart of a paging method in Embodiment 4 of the present disclosure;
Fig. 6 is a flowchart of a paging method in Embodiment 5 of the present disclosure;
Fig. 7 is a schematic diagram of a structure of a Mobility Management Entity (MME) in Embodiment 6 of the present disclosure;
Fig. 8 is a schematic diagram of a structure of an MME in Embodiment 6 of the present disclosure;
Fig. 9 is a schematic diagram of a structure of a base station in Embodiment 7 of the present disclosure;
Fig. 10 is a flowchart of a paging method in Embodiment 9 of the present disclosure;
Fig. 11 is a flowchart of a paging method in Embodiment 10 of the present disclosure;
Fig. 12 is a flowchart of a paging method in Embodiment 11 of the present disclosure;
Fig. 13 is a schematic diagram of a structure of an MME in Embodiment 12 of the present disclosure;
Fig. 14 is a schematic diagram of a structure of a gateway in Embodiment 13 of the present disclosure.

### Description of the Embodiments

Various embodiments of the present disclosure shall be described below with reference to the drawings. These embodiments are illustrative only, and are not intended to limit the present disclosure.

In order to solve the above problem, the embodiments of the present disclosure provide a paging method, in which an MME can receive paging indication information transmitted by a base station or a gateway, the paging indication information indicating that user equipment in an idle state has been waken up. Thus the MME stops transmitting a paging message according to the paging indication information. Alternatively, the MME only transmits the paging message once rather than retransmitting the same, when receiving data arrival indication information of UE in an idle state transmitted by a gateway. When the UE in the idle state has not been waken up, the gateway retransmits the data arrival indication information.

Through the above method, unnecessary paging overhead can be reduced, and the problem of the prior art is solved. Next, the embodiments of the present disclosure are described in details with reference to the drawings.

### Embodiment 1

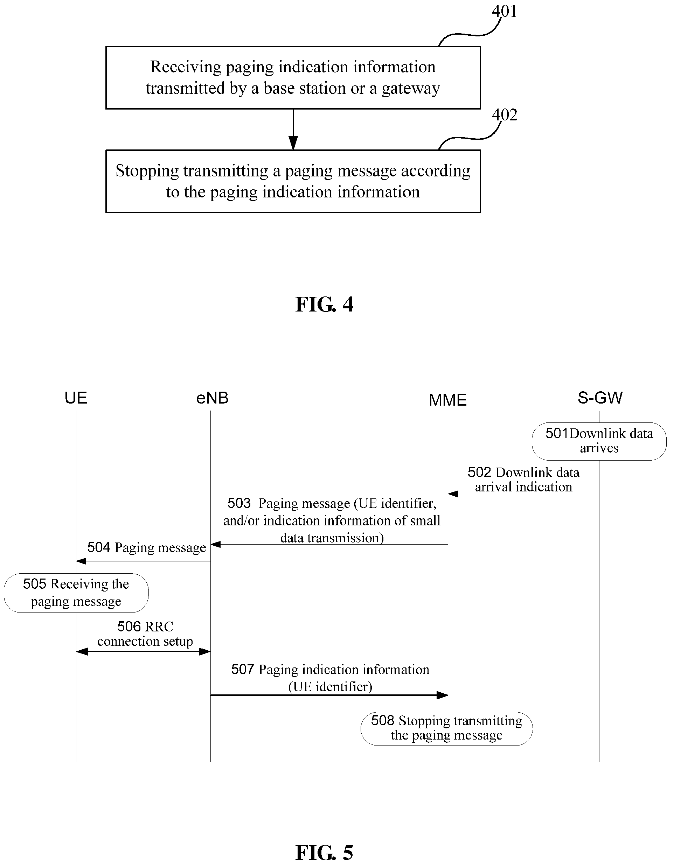

Fig. 4 is a flowchart of a paging method in Embodiment 1 of the present disclosure. As illustrated in Fig. 4, the method comprises:
Step 401: an MME receives paging indication information transmitted by a base station or a gateway, the paging indication information indicating that user equipment in an idle state has been waken up;
   in this embodiment, the paging indication information may include a user equipment identifier and/or indication information on small data packet transmission;
   when the paging indication information transmitted by the gateway is received, the user equipment identifier is consistent with a user equipment identifier contained in a data arrival indication of the UE in the idle state which is received from the gateway by the MME;
   when the paging indication information transmitted by the base station is received, the user equipment identifier is consistent with a user equipment identifier contained in a paging message transmitted to the base station by the MME.
Step 402: the MME stops transmitting a paging message according to the paging indication information;
   in this embodiment, when the MME receives the paging indication information transmitted by the base station, when a user equipment identifier contained in the paging indication information is consistent with a user equipment identifier contained in the paging message transmitted to the base station by the MME, it is determined that the user equipment in the idle state has been waken up, and the MME stops transmitting the paging message; or
   when the MME receives the paging indication information transmitted by the gateway, when a user equipment identifier contained in the paging indication information is consistent with a user equipment identifier contained in the data arrival indication transmitted to the MME by the gateway, it is determined that the user equipment in the idle state has been waken up, and the MME stops transmitting the paging message.

As can be seen from the embodiment, the above method avoids the MME from retransmitting the paging message and reduces the overhead of the paging signaling.

### Embodiment 2

Embodiment 2 of the present disclosure further provides a paging method, comprising:
transmitting, by a base station, paging indication information to an MME, when user equipment connecting to the base station is user equipment corresponding to a user equipment identifier contained in a paging message received by the base station from the MME and when the user equipment is in a connectionless mechanism for data transmission, and the paging indication information indicating that user equipment in an idle state has been waken up.

### Embodiment 3

Embodiment 3 of the present disclosure further provides a paging method, comprising:
transmitting, by a gateway, paging indication information to an MME, when user equipment that has set up a data transmission channel with the gateway is user equipment corresponding to a user equipment identifier contained in a data arrival indication message transmitted by the gateway to the MME and when the user equipment is in a connectionless mechanism for data transmission, and the paging indication information indicating that user equipment in an idle state has been waken up.

Cases where the paging indication information is received from the base station and the gateway shall be described respectively below with reference to the drawings.

### Embodiment 4

Fig. 5 is a flowchart of a paging method in Embodiment 4 of the present disclosure. As illustrated in Fig. 5, the method comprises:
step 501: a serving gateway (SGW) determines that downlink data of UE arrives;
step 502: when the UE is in an idle state, the SGW transmits a downlink data arrival indication to the MME, so as to trigger the MME to transmit a paging message to wake up the UE in the idle state;
   wherein the data arrival indication may include a user equipment identifier corresponding to the UE;
steps 503 and 504: the MME transmits a paging message to the UE through a base station (an eNB) to wake up the UE in the idle state;
   wherein the paging message includes the user equipment identifier, and it may also include indication information on small data packet transmission;
steps 505 and 506: the UE receives the paging message, and establishes an RRC connection with the base station (such as the eNB);
   wherein, the UE can verify the UE identifier in the paging message, and respond to the paging message by establishing the RRC connection; when the paging message includes the indication information on small data packet transmission, a transmission may be performed in the connectionless mechanism according to the indication information on small data packet transmission, so as to establishing the RRC connection with the eNB. The process is similar to the prior art, and hence omitted herein;
step 507: the eNB transmits paging indication information to the MME, to indicate through the paging indication information that the UE in the idle state has been waken up;
   wherein, after the eNB establishes the RRC connection with the UE, the eNB can verify whether the UE establishing the RRC connection is UE corresponding to the UE identifier in the paging message and whether the UE employs a connectionless mechanism for data transmission; if yes, the eNB transmits the paging indication information to the MME, the paging indication information indicating that the UE has been waken up; the paging indication information may include a UE identifier corresponding to that contained in the paging message transmitted to the eNB by the MME;
   for example, the paging indication information may be carried in either an initial UE message or a newly defined S1 message; when the paging indication information is carried in the initial UE message, the MME may omit the NAS information element in the initial UE message;
step 508: the MME receives the paging indication information transmitted by the eNB, and stops retransmitting the paging message of the UE according to the paging indication information;
   wherein, after receiving the paging indication information transmitted by the eNB, the MME may judge that the UE has been waken up according to the UE identifier, and stop retransmitting the paging message of the UE.

As can be seen from the embodiment, by receiving the paging indication information transmitted by the eNB, the MME can be prevented from retransmitting the paging message and the overhead of the paging signaling is reduced.

### Embodiment 5

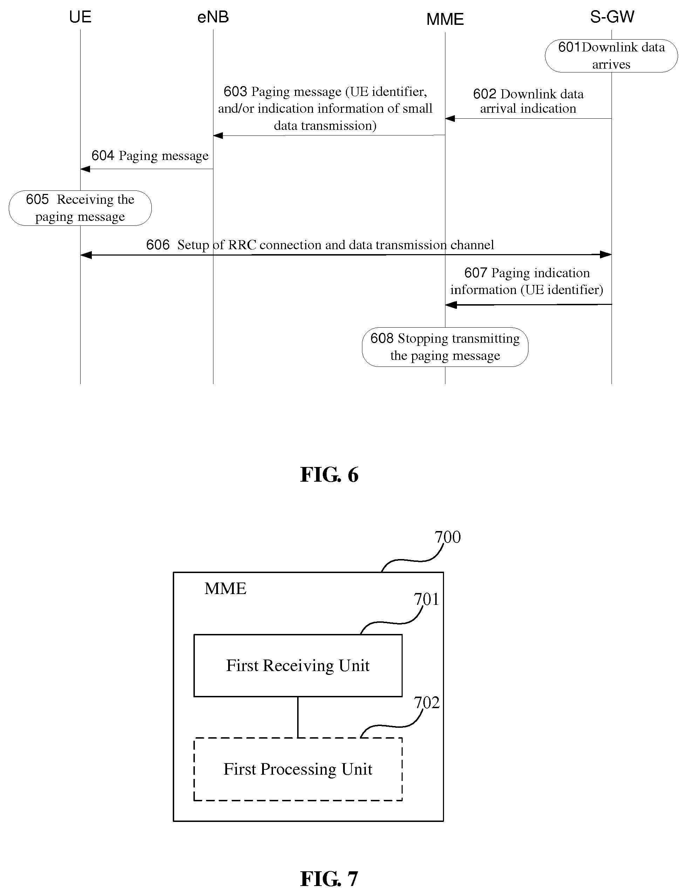

Fig. 6 is a flowchart of a paging method in Embodiment 5 of the present disclosure. As illustrated in Fig. 6, the method comprises:
step 601: a serving gateway (SGW) determines that downlink data of UE arrives;
step 602: when the UE is in an idle state, the SGW transmits a downlink data arrival indication to the MME, so as to trigger the MME to transmit a paging message to wake up the UE in the idle state;
   wherein the data arrival indication may include a user equipment identifier corresponding to the UE;
steps 603 and 604: the MME transmits a paging message to the UE through a base station (an eNB) to wake up the UE in the idle state;
   wherein the paging message includes the user equipment identifier, and it may also include indication information on small data packet transmission;
steps 605 and 606: the UE receives the paging message, and sets up a data transmission channel with the SGW through the base station(such as the eNB);
   wherein, after receiving the paging message, the UE can verify the UE identifier in the paging message, and respond to the paging message by establishing an RRC connection; when the paging message includes the indication information on small data packet transmission, a transmission may be performed in a connectionless mechanism according to the indication information on small data transmission, so as to set up a data transmission channel with the SGW through the eNB;
   in this embodiment, the RRC connection and data transmission channel S1 may be set up in the process as illustrated in Fig. 2, which is omitted herein;
step 607: the gateway transmits paging indication information to the MME, to indicate through the paging indication information that the UE in the idle state has been waken up;
   wherein, after the SGW sets up a data transmission channel with the UE, the SGW can verify that the UE setting up the data transmission channel is UE triggering a downlink data transmission; in addition, when the UE employs a connectionless mechanism for data transmission, the SGW transmits the paging indication information to the MME to indicate through the paging indication information that the UE has been waken up; the paging indication information includes a UE identifier corresponding to that contained in the downlink data arrival indication in step 601;
step 608: the MME receives the paging indication information transmitted by the SGW, and stops retransmitting the paging message of the UE according to the paging indication information;
   wherein, after receiving the paging indication information transmitted from the eNB, the MME may judge that the UE has been waken up according to the UE identifier, and stop retransmitting the paging message of the UE.

As can be seen from the embodiment, by receiving the paging indication information transmitted by the SGW, the MME can be prevented from retransmitting the paging message and the overhead of the paging signaling is reduced.

### Embodiment 6

Fig. 7 is a schematic diagram of a structure of a Mobility Management Entity (MME) in Embodiment 6 of the present disclosure. As illustrated in Fig. 7, the MME 600 comprises a first receiving unit 601 configured to receive paging indication information transmitted by a base station or a gateway, the paging indication information indicating that user equipment in an idle state has been waken up.

In addition, the MME 600 may further comprise a first processing unit 602 configured to stop transmitting a paging message in accordance with the paging indication information.

As can be seen from the embodiment, the base station or the gateway notifies the MME that the UE in the idle state has been waken up, thereby stopping retransmitting the paging message and reducing the overhead of paging signaling.

The workflow of the MME 600 is described in Embodiments 1 and 4-5, thus omitted herein.

In this embodiment, besides the above components, the MME 600 may further comprise other components the same as those in an existing MME.

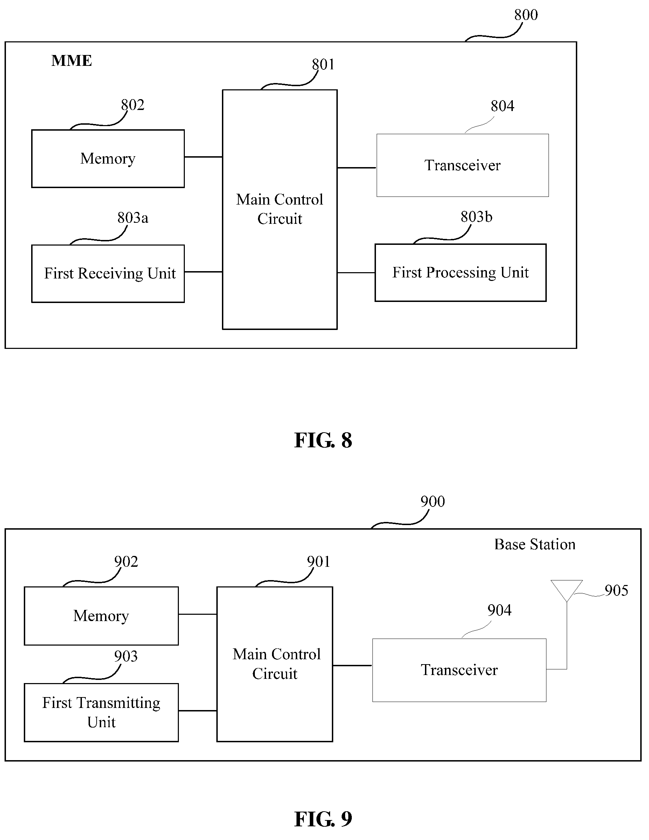

Fig. 8 is a schematic diagram of a structure of an MME in Embodiment 6 of the present disclosure. As illustrated in Fig. 8, an MME 800 comprises a first receiving unit 803a and a first processing unit 803b, and their functions are described above. In addition, the MME 800 further comprises a main control circuit 801, a memory 802 and a transceiver 804, wherein the memory 802 may store a paging program, and execute the program under a control of the main control circuit 801. The execution process of the program is described in Embodiment 1, thus omitted herein. The functions of other components are similar to those in the prior art, thus omitted herein. In addition, the first receiving unit 803a and the first processing unit 803b may be used in combination with the main control circuit 801.

### Embodiment 7

Embodiment 7 of the present disclosure further provides a base station, comprising a first transmitting unit configured to transmit paging indication information to an MME, when user equipment connecting to the base station is user equipment corresponding to a user equipment identifier contained in a paging message received by the base station from the MME and when the user equipment is in a connectionless mechanism for data transmission, and the paging indication information indicating that user equipment in an idle state has been waken up.

In this embodiment, besides the first transmitting unit, the base station may further comprise other components the same as those in an existing base station.

Fig. 9 is a schematic diagram of a structure of a base station in Embodiment 7 of the present disclosure. As illustrated in Fig. 9, a base station 900 comprises a first transmitting unit 903, and the function thereof is described above. In addition, the base station 900 further comprises a main control circuit 901, a memory 902, a transceiver 904 and an antenna 905, wherein the memory 902 can store a paging program and execute the program under a control of the main control circuit 901. The execution process of the program is described in Embodiment 1, thus omitted herein. The functions of other components are similar to those in the prior art, thus omitted herein. In addition, the first transmitting unit 903 may be used in combination with the main control circuit 901.

In this embodiment, the base station is described in Embodiments 2 and 4-5, thus omitted herein.

### Embodiment 8

Embodiment 8 of the present disclosure provides a gateway, comprising a second transmitting unit configured to transmit paging indication information to an MME, when user equipment that has set up a data transmission channel with the gateway is user equipment corresponding to a user equipment identifier contained in a data arrival notification message transmitted by the gateway to the MME and when the user equipment is in a connectionless mechanism for data transmission, and the paging indication information indicating that user equipment in an idle state has been waken up.

In this embodiment, besides the second transmitting unit, the gateway may further comprise other components the same as those in an existing gateway, such as a main control circuit, a memory and a transceiver, which are similar to those in the schematic diagram of the structure of the base station as illustrated in Fig. 9, thus omitted herein.

### Embodiment 9

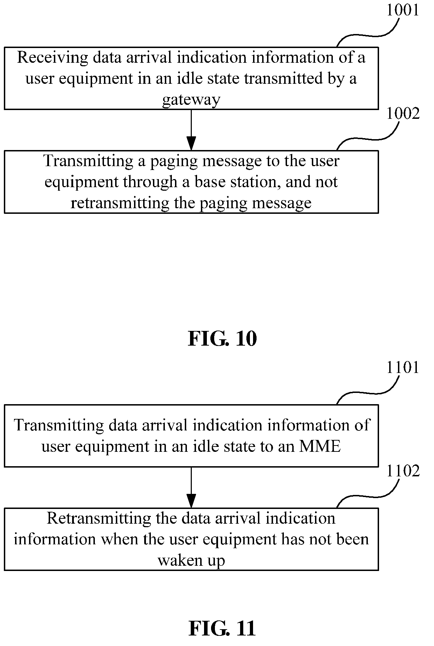

Fig. 10 is a flowchart of a paging method in Embodiment 9 of the present disclosure. As illustrated in Fig. 10, the method comprises:
step 1001: an MME receives data arrival indication information of user equipment in an idle state transmitted by a gateway, to trigger the MME to wake up the user equipment;
   wherein, when downlink data of the user equipment in the idle state arrives, the gateway transmits a data arrival indication to the MME, so as to trigger the MME to transmit a paging message; this process is similar to the prior art, thus omitted herein.
step 1002: the MME transmits a paging message to the user equipment through a base station, and does not retransmit the paging message;
   wherein, the MME can transmit the paging message to the UE through an eNB to wake up the UE in the idle state, the paging message comprising a UE identifier, and may further comprise indication information on small data packet transmission; in this step, if the MME acquires that the UE performs a data transmission in a small data transmission mechanism such as a connectionless mechanism, the MME transmits the paging message only once, i.e., the MME does not retransmit the paging message. Thus the MME can reduce the overhead of paging signaling.

### Embodiment 10

Fig. 11 is a flowchart of a paging method in Embodiment 10 of the present disclosure. As illustrated in Fig. 11, the method comprises:
step 1101: a gateway transmits data arrival indication information of user equipment in an idle state to an MME, to trigger the MME to wake up the user equipment; and
step 1102: the gateway retransmits the data arrival indication information when the user equipment has not been waken up, so as to trigger the MME to transmit a paging message.

In this embodiment, when the gateway has not been received data transmission channel setup information from the user equipment within a predetermined time, it can be determined that the user equipment has not been waken up.

Next, the paging method in the embodiment of the present disclosure is described in details in conjunction with the specific scene.

### Embodiment 11

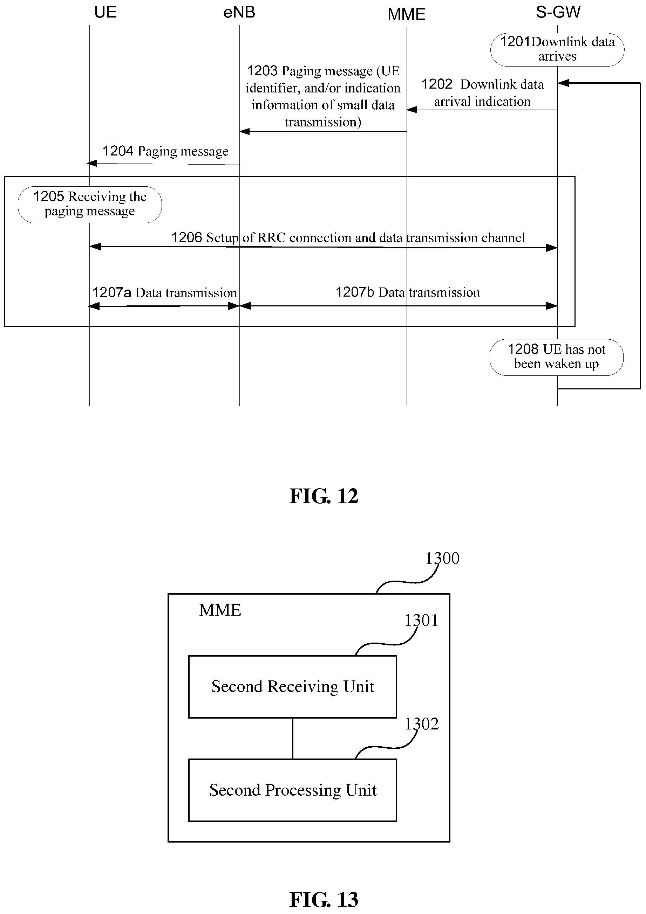

Fig. 12 is a flowchart of a paging method in Embodiment 11 of the present disclosure. As illustrated in Fig. 12, the method comprises:
step 1201: a serving gateway (SGW) determines that downlink data of UE arrives;
step 1202: when the UE is in an idle state, the SGW transmits a downlink data arrival indication to an MME, so as to trigger the MME to transmit a paging message to wake up the UE in the idle state;
   wherein the data arrival indication may include an user equipment identifier corresponding to the UE;
steps 1203 and 1204: the MME transmits a paging message to the UE through a base station (an eNB) to wake up the UE in the idle state;
   wherein the paging message includes the user equipment identifier, and it may also include indication information on small data packet transmission;
   in this embodiment, if the MME acquires that the UE performs a data transmission in a small data transmission mechanism such as a connectionless mechanism, the MME transmits the paging message only once, i.e., the MME does not retransmit the paging message;
steps 1205 and 1206: the UE receives the paging message, and responds to the paging message by setting up a connection with the network side, and sets up a data transmission channel with the SGW through the base station (such as the eNB);
   wherein, in this embodiment, the RRC connection and data transmission channel S1 may be set up in the process as illustrated in Fig. 2, which is omitted herein;
steps 1207a and 1207b, the SGW performs the data transmission process of the UE, which is similar to the prior art, and omitted herein.

In this embodiment, after step 1204, when the UE does not successfully receive the paging message, or not successfully respond to the paging message, the method may further comprise:
step 1208: the SGW judges that the UE triggering downlink data transmission has not been waken up,
   thus, the SGW triggers a retransmission of downlink data arrival indication to retransmit the downlink data arrival indication to the MME, i.e., returns to step 1202;
   wherein the SGW may determine whether the UE has been waken up according to a timer mechanism, i.e., if data transmission channel setup information is still not received from the UE after the timer expires, the SGW can determine that the UE has not been waken up. In addition, the SGW may also determine by employing other mechanism, not limited to the timer mechanism.

As can be seen from the embodiment, if the MME acquires that the UE performs a data transmission in a small data transmission mechanism such as a connectionless mechanism, the MME transmits the paging message only once, i.e., the MME does not retransmit the paging message, thereby reducing the overhead of paging signaling.

### Embodiment 12

Fig. 13 is a schematic diagram of a structure of an MME in Embodiment 12 of the present disclosure. As illustrated in Fig. 13, an MME 1300 comprises a second receiving unit 1301 and a second processing unit 1302, wherein,
the second receiving unit 1301 is configured to receive data arrival indication information of user equipment in an idle state transmitted by a gateway, to trigger the MME to wake up the user equipment; and
the second processing unit 1302 is configured to transmit a paging message to the user equipment through a base station when the user equipment uses a small data transmission mechanism, and not retransmit the paging message.

In addition, besides the above components, the MME may further comprise other components the same as those in the MME of the prior art, which is similar to the embodiment as illustrated in Fig. 8, thus omitted herein.

The working process of the MME is described in Embodiments 9 and 11, thus omitted herein.

### Embodiment 13

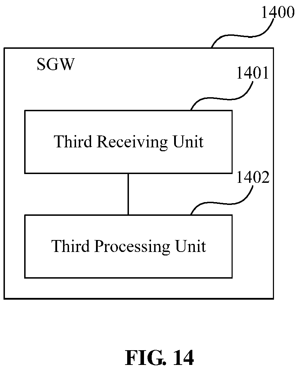

Fig. 14 is a schematic diagram of a structure of a gateway in Embodiment 13 of the present disclosure. As illustrated in Fig. 13, a gateway 1400 comprises a third transmitting unit 1401 and a third processing unit 1402, wherein,
the third transmitting unit 1401 is configured to transmit data arrival indication information of user equipment in an idle state to an MME, to trigger the MME to wake up the user equipment; and the third processing unit 1402 is configured to retransmit the data arrival indication information when the user equipment has not been waken up.

In this embodiment, the gateway 1400 may further comprise a determining unit (not illustrated) configured to determine that the user equipment has not been waken up when data transmission channel setup information has not been received from the user equipment within a predetermined time.

In addition, when the determining unit determines that the user equipment has not been waken up, the third processing unit 1402 retransmits the data arrival indication information.

In addition, besides the above components, the MME may further comprise other components the same as those in the MME of the prior art, which is similar to Embodiment 8 and omitted herein

### Embodiment 14

Embodiment 14 of the present disclosure further provides a communication system that may comprise user equipment, a base station, an MME and a gateway, wherein the functions of the user equipment and the base station are similar to the prior art.
the gateway is used for transmitting paging indication information to the MME, when the user equipment that has set up a data transmission channel with the gateway is user equipment corresponding to a user equipment identifier contained in a data arrival indication message transmitted by the gateway to the MME and when the user equipment is in a connectionless mechanism for data transmission, and the paging indication information indicating that user equipment in an idle state has been waken up; and
the MME is used for receiving the paging indication information transmitted by the gateway, the paging indication information indicating that user equipment in an idle state has been waken up, and stopping transmitting a paging message.

The working process of the system is described in Embodiment 5, thus omitted herein.

### Embodiment 15

Embodiment 15 of the present disclosure further provides a communication system that may comprise user equipment, a base station, an MME and a gateway, wherein the functions of the user equipment and the gateway are similar to the prior art.
the base station is used for transmitting paging indication information to the MME, when the user equipment in connection with the base station is user equipment corresponding to a user equipment identifier contained in a paging message received by the base station from the MME and when the user equipment is in a connectionless mechanism for data transmission, and the paging indication information indicating that user equipment in an idle state has been waken up; and
the MME is used for receiving the paging indication information transmitted by the gateway, the paging indication information indicating that user equipment in an idle state has been waken up, and stopping transmitting the paging message

The working process of the system is described in Embodiment 4, thus omitted herein.

### Embodiment 16

Embodiment 16 of the present disclosure further provides a communication system that may comprise user equipment, a base station, an MME and a gateway, wherein the functions of the user equipment and the base station are similar to the prior art;
the gateway is used for transmitting data arrival indication information of user equipment in an idle state to the MME, to trigger the MME to wake up the user equipment, and is further used for retransmitting the data arrival indication information when the user equipment has not been waken up; and
the MME is used for receiving the data arrival indication information of the user equipment in an idle state transmitted by the gateway, to trigger the MME to wake up the user equipment, and transmitting a paging message to the user equipment through the base station when the user equipment uses a small data transmission mechanism, and not retransmitting the paging message.

The working process of the system is described in Embodiment 11, thus omitted herein.

The embodiment of the present disclosure further provides a computer readable program, wherein when being executed in a base station, enabling a computer to execute the paging method of Embodiments 2 and 4 in the base station.

The embodiment of the present disclosure further provides a storage medium storing a computer readable program, wherein the computer readable program enables a computer to execute the paging method of Embodiments 2 and 4 in a base station.

The embodiment of the present disclosure further provides a computer readable program, wherein when being executed in a mobility management entity, enabling a computer to execute the paging method of Embodiments 1, 4, 5, 9 and 11 in the mobility management entity.

The embodiment of the present disclosure further provides a storage medium storing a computer readable program, wherein the computer readable program enables a computer execute the paging method of Embodiments 1, 4, 5, 9 and 11 in a mobility management entity.

The embodiment of the present disclosure further provides a computer readable program, wherein when being executed in a gateway, enabling a computer to execute the paging method of Embodiments 3, 5, 10 and 11 in the gateway.

The embodiment of the present disclosure further provides a storage medium storing a computer readable program, wherein the computer readable program enables a computer execute the paging method of Embodiments 3, 5, 10 and 11 in a gateway.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

## Claims

1. A paging method, comprising:
receiving, by a mobility management entity (MME), paging indication information transmitted by a base station or a gateway, the paging indication information indicating that user equipment in an idle state has been waken up.

2. The method according to claim 1, further comprising:
stopping transmitting a paging message in accordance with the paging indication information.

3. The method according to claim 1, wherein the paging indication information includes a user equipment identifier and/or indication information on small data packet transmission;
wherein the user equipment identifier is consistent with a user equipment identifier contained in a data arrival indication received by the MME from the gateway, or consistent with a user equipment identifier contained in a paging message transmitted by the MME to the base station.

4. A paging method, comprising:
transmitting, by a base station, paging indication information to a mobility management entity (MME), when user equipment connecting to the base station is user equipment corresponding to a user equipment identifier contained in a paging message received by the base station from the MME and when the user equipment is in a connectionless mechanism for data transmission, and the paging indication information indicating that user equipment in an idle state has been waken up.

5. A paging method, comprising:
transmitting, by a gateway, paging indication information to a mobility management entity (MME), when user equipment that has set up a data transmission channel with the gateway is user equipment corresponding to a user equipment identifier contained in a data arrival indication message transmitted by the gateway to the MME and when the user equipment is in a connectionless mechanism for data transmission, and the paging indication information indicating that user equipment in an idle state has been waken up.

6. A mobility management entity, comprising:
a first receiving unit configured to receive paging indication information transmitted by a base station or a gateway, the paging indication information indicating that user equipment in an idle state has been waken up.

7. The mobility management entity according to claim 6, further comprising:
a first processing unit configured to stop transmitting a paging message in accordance with the paging indication information.

8. A base station, comprising:
a first transmitting unit configured to transmit paging indication information to a mobility management entity (MME), when user equipment connecting to the base station is user equipment corresponding to a user equipment identifier contained in a paging message received by the base station from the MME and when the user equipment is in a connectionless mechanism for data transmission, and the paging indication information indicating that user equipment in an idle state has been waken up.

9. A gateway, comprising:
a second transmitting unit configured to transmit paging indication information to a mobility management entity (MME), when user equipment that has set up a data transmission channel with the gateway is user equipment corresponding to a user equipment identifier contained in a data arrival notification message transmitted by the gateway to the MME and when the user equipment is in a connectionless mechanism for data transmission, and the paging indication information indicating that user equipment in an idle state has been waken up.

10. A paging method, comprising:
receiving, by a mobility management entity (MME), data arrival indication information of user equipment in an idle state transmitted by a gateway, to trigger the MME to wake up the user equipment; and
transmitting, by the MME, a paging message to the user equipment through a base station when the user equipment uses a small data transmission mechanism, and not retransmitting the paging message.

11. A paging method, comprising:
transmitting, by a gateway, data arrival indication information of user equipment in an idle state to a mobility management entity (MME), to trigger the MME to wake up the user equipment; and
retransmitting, by the gateway, the data arrival indication information when the user equipment has not been waken up.

12. The method according to claim 11, further comprising:
determining that the user equipment has not been waken up when data transmission channel setup information has not been received from the user equipment within a predetermined time.

13. A mobility management entity, comprising:
a second receiving unit configured to receive data arrival indication information of user equipment in an idle state transmitted by a gateway, to trigger the mobility management entity to wake up the user equipment; and
a second processing unit configured to transmit a paging message to the user equipment through a base station when the user equipment uses a small data transmission mechanism, and not retransmit the paging message.

14. A gateway, comprising:
a third transmitting unit configured to transmit data arrival indication information of user equipment in an idle state to a mobility management entity (MME), to trigger the MME to wake up the user equipment; and
a third processing unit configured to retransmit the data arrival indication information when the user equipment has not been waken up.

15. The gateway according to claim 14, further comprising:
a determining unit configured to determine that the user equipment has not been waken up when data transmission channel setup information has not been received from the user equipment within a predetermined time.

16. A communication system, comprising user equipment, a base station, a mobility management entity (MME) and a gateway, wherein
the gateway is used for transmitting paging indication information to the MME, when the user equipment that has set up a data transmission channel with the gateway is user equipment corresponding to a user equipment identifier contained in a data arrival indication message transmitted by the gateway to the MME and when the user equipment is in a connectionless mechanism for data transmission, and the paging indication information indicating that user equipment in an idle state has been waken up; and
the MME is used for receiving the paging indication information transmitted by the gateway, the paging indication information indicating that user equipment in an idle state has been waken up, and stopping transmitting a paging message.

17. A communication system, comprising user equipment, a base station, a mobility management entity (MME) and a gateway, wherein
the base station is used for transmitting paging indication information to the MME, when the user equipment in connection with the base station is user equipment corresponding to a user equipment identifier contained in a paging message received by the base station from the MME and when the user equipment is in a connectionless mechanism for data transmission, and the paging indication information indicating that user equipment in an idle state has been waken up; and
the MME is used for receiving the paging indication information transmitted by the gateway, the paging indication information indicating that user equipment in an idle state has been waken up, and stopping transmitting the paging message.

18. A communication system, comprising user equipment, a base station, a mobility management entity (MME) and a gateway, wherein
the gateway is used for transmitting data arrival indication information of user equipment in an idle state to the MME, to trigger the MME to wake up the user equipment, and is further used for retransmitting the data arrival indication information when the user equipment has not been waken up; and
the MME is used for receiving the data arrival indication information of the user equipment in an idle state transmitted by the gateway, to trigger the MME to wake up the user equipment, and transmitting a paging message to the user equipment through the base station when the user equipment uses a small data transmission mechanism, and not retransmitting the paging message.

19. A computer readable program, wherein when being executed in a base station, enabling a computer to execute the paging method according to claim 4 in the base station.

20. A storage medium storing a computer readable program, wherein the computer readable program enables a computer to execute the paging method according to claim 4 in a base station.

21. A computer readable program, wherein when being executed in a mobility management entity, enabling a computer to execute the paging method according to any one of claims 1 to 3 and 10 in the mobility management entity.

22. A storage medium storing a computer readable program, wherein the computer readable program enables a computer execute the paging method according to any one of claims 1 to 3 and 10 in a mobility management entity.

23. A computer readable program, wherein when being executed in a gateway, enabling a computer to execute the paging method according to claim 5, 11 or 12 in the gateway.

24. A storage medium storing a computer readable program, wherein the computer readable program enables a computer execute the paging method according to claim 5, 11 or 12 in a gateway.
